# EUROPEAN PATENT APPLICATION

(11) **EP 1 260 465 A1**
(43) Date of publication of application: **27.11.2002**
(21) Application number: 02011455.9
(22) Date of filing: 24.05.2002
(51) Int. Cl.: B65G 47/244

(54) **Article orienting device for a conveyor line**

(30) Priority: 25.05.2001 IT TO20010501
(71) Applicant: ISP Systems S.r.l., 61100 Pesaro (IT)
(72) Inventor: Pritelli, Guiseppe, 47033 Cattolica (IT)
(74) Representative: Cerbaro, Elena, Dr.

(57) **Abstract**

In a line for conveying a panel (2) of wood or similar, an orienting device (9; 60) has at least one gripping member (37; 76) for rotating the panel (2) by an angle (a) about an axis of rotation (25; 66) perpendicular to a conveying plane (11, 21) of the panel (2); and at least two stop members (27; 74) arranged to position the panel (2) correctly on the conveying plane (11, 21); the two stop members (27; 74) rotating about the axis of rotation (25; 66) together with the gripping member (37; 76).

## Description

The present invention relates to a line for conveying a panel of wood or similar.

More specifically, the present invention relates to a line for conveying a panel of wood or similar, of the type comprising conveying means defining at least one conveying plane for the panel, and for feeding the panel in a given first direction and along a given path; and an orienting device located along said path to rotate the panel substantially 90° about an axis perpendicular to said conveying plane.

The orienting device normally comprises stop means mounted crosswise to the conveying plane to position the panel correctly in the first direction and in a second direction perpendicular to the first direction and to said axis; and two gripping members, which are located one over and the other under the panel, are movable with respect to each other to and from an operating position gripping the panel, and are mounted for rotation to rotate the panel 90° as stated.

For the two gripping members to rotate the panel correctly, the stop means are normally movable, parallel to said axis, between a lowered rest position, in which the stop means are positioned beneath the conveying plane, and a raised operating position, in which the stop means are positioned over the conveying plane.

Known conveying lines of the above type are therefore relatively slow, owing to the stop means, at each operating cycle of the orienting device, having to be moved between the raised and lowered positions to avoid interfering with the panel being rotated.

A further drawback of known lines of the above type lies in the inaccuracy of the orienting device. That is, during rotation about said axis, the panel is engaged by the two gripping members, but not by the stop means, so that, known lines of the above type must be provided with positioning means which, once the panel is released by the two gripping members, provide for aligning the panel accurately in said first direction.

It is an object of the present invention to provide a line for conveying a panel of wood or similar, designed to eliminate the aforementioned drawbacks.

According to the present invention, there is provided a line for conveying a panel of wood or similar, comprising conveying means defining at least one conveying plane for said panel, and for feeding the panel in a given first direction and along a given path; and an orienting device located along said path, and in turn comprising gripping means mounted to rotate about an axis perpendicular to said conveying plane, and for imparting to said panel a rotation of a given angle about said axis, and stop means mounted crosswise to said conveying plane to position said panel correctly in said first direction and in a second direction substantially crosswise to said axis; characterized in that said stop means rotate about said axis together with said gripping means.

A non-limiting embodiment of the present invention will be described by way of example with reference to the accompanying drawings, in which:
Figure 1 shows a schematic view in perspective, with parts in section and parts removed for clarity, of a preferred embodiment of the line according to the present invention;
Figure 2 shows a schematic plan view, with parts removed for clarity, of the Figure 1 line;
Figure 3 shows a partly sectioned side view of a detail in Figure 1;
Figure 4 shows a schematic view in perspective of a variation of the Figure 3 detail;
Figure 5 shows a partly sectioned side view of the Figure 4 detail.

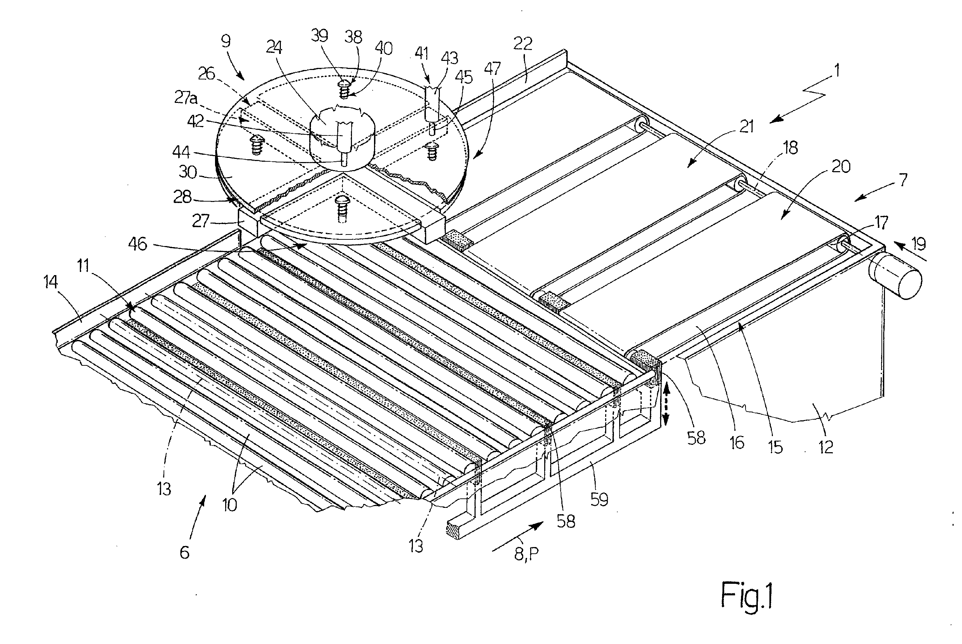

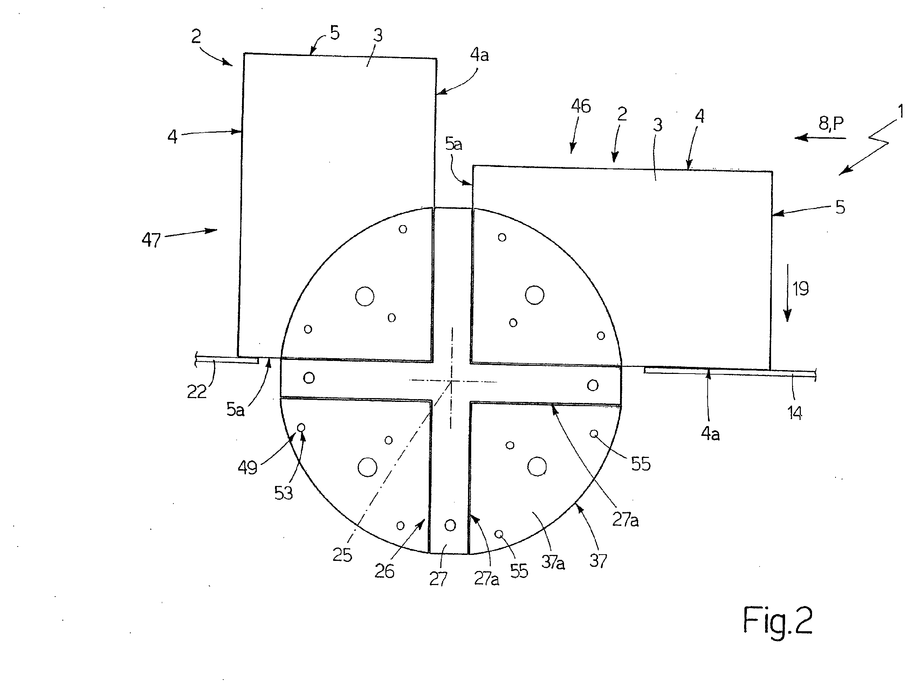

With reference to Figures 1 and 2, number 1 indicates as a whole a line for conveying a panel 2 of wood or similar, which, in the example shown, is substantially parallelepiped-shaped with a substantially rectangular section, and comprises two parallel major lateral faces 3, two parallel minor lateral faces 4 perpendicular to faces 3, and two parallel minor lateral faces 5 perpendicular to faces 3 and 4.

Line 1 comprises two conveying devices 6, 7 arranged in series to feed panel 2 in a given direction 8 and along a given path P; and an orienting device 9 located between devices 6 and 7 to transfer panel 2 between devices 6 and 7 as described in detail later on.

Device 6 comprises a number of powered conveying rollers 10 defining a substantially horizontal conveying plane 11, on which panel 2 is conveyed with faces 4 and 5 parallel and crosswise to direction 8 respectively. Rollers 10 are fitted to a fixed frame 12 of line 1 to rotate, with respect to frame 12, about respective axes 13 substantially parallel to one another and sloping with respect to direction 8 to keep one of faces 4 (hereinafter indicated 4a) contacting a guide member 14 substantially parallel to direction 8.

Device 7 comprises a number of belt conveyors 15 fitted to frame 12 and movable in respective vertical planes substantially parallel to one another and to direction 8. Each conveyor 15 comprises a belt 16 looped about two pulleys 17 - one of which is powered in time with a pulley 17 of each of the other conveyors 15 - mounted to rotate about respective axes 18 substantially parallel to a direction 19 crosswise to direction 8.

Each belt 16 has a conveying branch 20 substantially coplanar with branches 20 of the other belts 16, so as to define a substantially horizontal conveying plane 21 coplanar with plane 11.

Device 7 also comprises a guide member 22 aligned with member 14 in direction 8; and a number of pressure rollers (not shown) located over plane 21.

In a variation not shown, conveyors 15 are suction belt conveyors, which enable both member 22 and said pressure rollers (not shown) to be dispensed with.

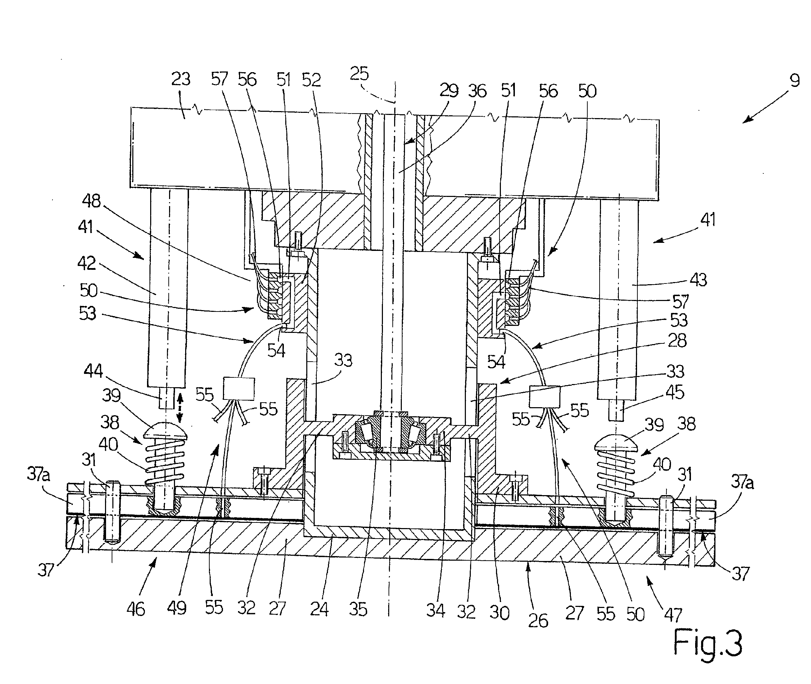

With reference to Figures 1 and 3, orienting device 9 comprises a fixed frame 23; and a substantially tubular shaft 24 fitted in rotary manner to frame 23, and rotated in steps, with respect to frame 23 and by a known actuating device (not shown), about an axis 25 perpendicular to planes 11 and 21.

Device 9 also comprises a spoked wheel 26 fitted to a free end of shaft 24, and having a number of (in the example shown, four) substantially parallelepiped-shaped stop members 27 equally spaced about axis 25 and extending radially outwards from axis 25, so that, at each stop of device 9, two of the four members 27 are positioned parallel to direction 8, and two parallel to direction 19.

In connection with the above, it should be pointed out that each member 27 is defined laterally by two parallel flat lateral surfaces 27a perpendicular to planes 11 and 21; and that axis 25 is so located that, at each stop of device 9, one of surfaces 27a of each of the two members 27 parallel to direction 8 is aligned with members 14 and 22.

Device 9 also comprises a supporting member 28 fitted in sliding and angularly fixed manner to shaft 24, and therefore to wheel 26; and an actuating cylinder 29 for moving member 28 linearly along axis 25.

Member 28 comprises a tubular body 30, which is coaxial with shaft 24, is located over wheel 26, is connected to each member 27 by a respective pin 31 parallel to axis 25, and has a number of arms 32, which are equally spaced about axis 25, extend radially towards axis 25, and engage in sliding and angular fixed manner respective slots 33 formed radially through shaft 24.

Inside shaft 24, arms 32 are connected to a hub 34 coaxial with axis 25 and connected in axially fixed, angularly movable manner, with the interposition of a double thrust bearing 35, to a supporting rod 36, which engages shaft 24, coaxially with axis 25, and defines the output rod of actuating cylinder 29.

Device 9 also comprises a number of gripping members 37, which are equal in number to members 27, are equally spaced about axis 25, are located beneath body 30, and each comprise a respective plate 37a in the form of a sector extending between two relative adjacent members 27.

Each plate 37a is connected in sliding and angularly fixed manner to body 30 by a screw 38, which is parallel to axis 25, extends through body 30 to engage plate 37a, and has a head 39, which cooperates with a spring 40 interposed between head 39 and body 30 to keep plate 37a normally in a raised operating position separated from planes 11 and 21 by a distance greater than the thickness of panel 2 measured parallel to axis 25.

Screw 38 is moved, in opposition to relative spring 40 and into a lowered operating position in which plate 37a is separated from planes 11 and 21 by a distance substantially equal to the thickness of panel 2, by an actuating device 41 comprising two actuating cylinders 42, 43, which are operated selectively by a known central control unit (not shown), and have respective output rods 44, 45, which are positioned coaxial with screw 38 and facing head 39 when member 37 is located at a pickup station 46, to remove panel 2 off rollers 10, and at a release station 47, to release panel 2 on to conveyors 15, respectively.

Member 37 is a suction gripping member, which is connected to a known suction device (not shown) by a pneumatic circuit 48 comprising two portions 49, 50 communicating with each other and angularly integral with member 37 and frame 23 respectively.

More specifically, portion 49 comprises a conduit 51, which extends through a sleeve 52 fitted to shaft 24 and normally common to all of members 37; and a conduit 53, which has an inlet 54 communicating with conduit 51, and a number of (in the example shown, three) outlets 55 communicating with distinct points on the bottom surface of plate 37a. And portion 50 comprises an annular conduit 56, which is coaxial with axis 25, communicates with a feed tube 57 of the pneumatic suction device (not shown), and is located facing conduit 51 so as to communicate with conduit 51 regardless of the position of conduit 51 about axis 25.

With reference to Figure 2, in actual use, conveying rollers 10 feed panel 2 to pickup station 46, keeping face 4a in contact first with guide member 14 and then with the stop member 27 aligned with member 14 in direction 8.

At station 46, the front face 5 (hereinafter indicated 5a) in direction 8 comes into contact with the member 27 positioned crosswise to direction 8; output rod 44 of actuating cylinder 42 is moved into an extracted position to move relative gripping member 37 into the lowered operating position contacting top surface 3; and the pneumatic suction device (not shown) is activated to grip and retain panel 2.

At this point, rod 44 is moved into a withdrawn position, so that the member 37 in question is moved by relative spring 40 into the raised operating position to detach panel 2 from rollers 10; orienting device 9 is activated to rotate panel 2 by 90° about axis 25 and transfer panel 2 to release station 47 with face 5a parallel to direction 8 and aligned with guide member 22, and with face 4a crosswise to direction 8; and the member 37 in question is moved by output rod 45 of actuating cylinder 43 into the lowered operating position to position panel 2 on belts 16 of conveyors 15.

It should be pointed out that, in the course of the above operating sequence, the member 37 in question cooperates with a number of brushes 58, which are located between some of rollers 10 and between conveyors 15, engage bottom surface 3, and are fitted to a frame 59 movable linearly parallel to axis 25.

Finally, the pneumatic suction device (not shown) is deactivated; rod 45 is moved into a withdrawn position to allow the member 37 in question to be moved by relative spring 40 into the raised operating position; and conveyors 15 are activated to feed panel 2 in direction 8.

Line 1 therefore has the following main advantages:
the position of panel 2 is referred to the same stop members 27 throughout transfer between stations 46 and 47; and
as soon as panel 2 reaches release station 47, another panel 2 can be fed immediately into pickup station 46 with no need to reposition stop and gripping members 27 and 37.

In connection with the above, it should be pointed out that:
the orienting device may be activated to rotate panel 2 by an angle a other than 90° about axis 25; and
since panel 2 may be shaped differently from the one described and shown in Figure 2, the number of stop members 27 and/or the way in which they are arranged about axis 25 may differ according to the shape of panel 2.

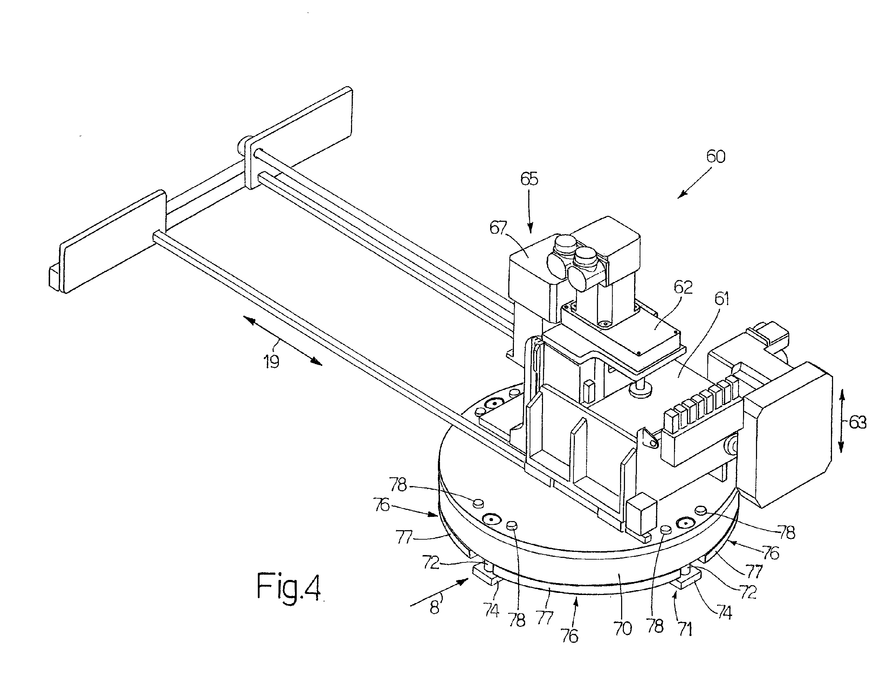

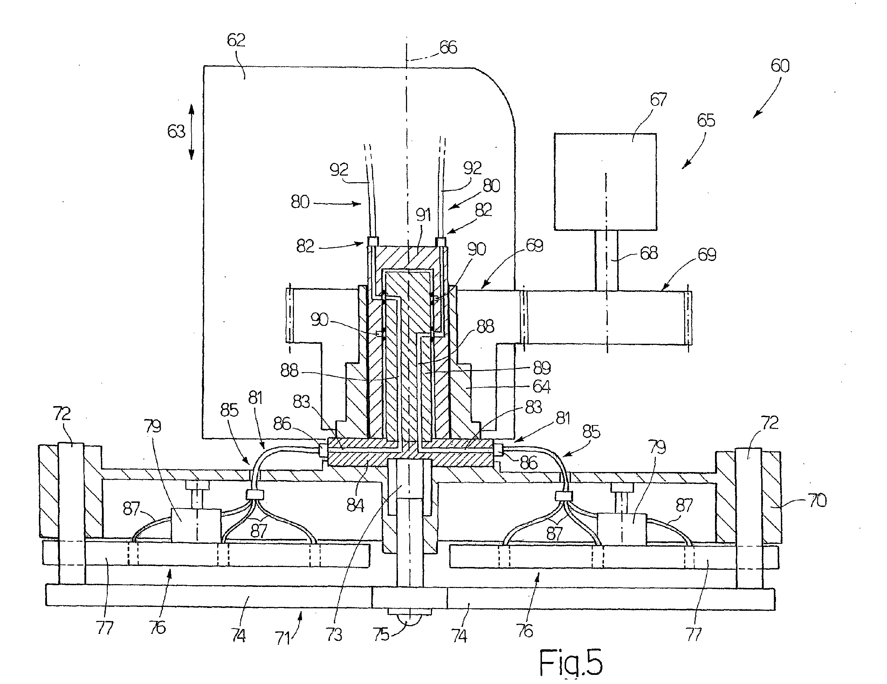

The variation shown in Figures 4 and 5 relates to an orienting device 60, which comprises a first slide 61 fitted in known manner to frame 12 and moved linearly, with respect to frame 12 and in direction 19, by a known actuating device (not shown); and a second slide 62 fitted in known manner to slide 61 and moved linearly, with respect to slide 61 and by a known actuating device (not shown), in a vertical direction 63 perpendicular to directions 8 and 19.

Device 60 also comprises a substantially tubular shaft 64, which extends through a substantially horizontal bottom wall of slide 62, is fitted in rotary manner to slide 62, and is rotated in steps, with respect to slide 62 and by an actuating device 65, about a longitudinal axis 66 parallel to direction 63. Device 65 comprises a known motor 67 fitted to slide 62 and having an output shaft 68 connected to shaft 64 by a gear reducer 69.

Device 60 also comprises a cylindrical drum 70 coaxial with axis 66 and fitted in angularly and axially fixed manner to shaft 64; and a spoked wheel 71 fitted in sliding and angularly fixed manner to drum 70 with the interposition of a number of (in the example shown, four) guide pins 72 equally spaced about axis 66, and with the interposition of a pneumatic damper 73 coaxial with axis 66.

Wheel 71 comprises a number of (in the example shown, four) substantially parallelepiped-shaped stop members 74 equally spaced about axis 66 and extending radially outwards from axis 66, so that, at each stop of device 60, two of the four members 74 are positioned parallel to direction 8, and two parallel to direction 19; and a central supporting ball 75 projecting downwards from wheel 71.

Device 60 also comprises a number of gripping members 76, which are equal in number to members 74, are equally spaced about axis 66, and each comprise a respective plate 77 in the form of a sector extending between two relative adjacent members 74.

Each plate 77 is connected in sliding and angularly fixed manner to drum 70 by the interposition of a number of guide pins 78 parallel to direction 63, and is moved, in direction 63 and by an actuating cylinder 79, between a raised operating position, in which plate 77 is separated from planes 11 and 21 by a distance greater than the thickness of panel 2, and a lowered operating position, in which plate 77 is separated from planes 11 and 21 by a distance substantially equal to the thickness of panel 2.

Each member 76 is a suction gripping member connected to a known suction device (not shown) by two pneumatic circuits 80 (only one shown in Figure 5), each of which comprises two portions 81, 82 communicating with each other and carried by member 76 and slide 62 respectively.

Portion 81 comprises a conduit 83 extending radially outwards from axis 66 and formed through a cylindrical manifold 84, which is common to all of members 76 and connected in angularly and axially fixed manner to shaft 64, on top of drum 70; a conduit 85, which has an inlet 86 communicating with conduit 83, and a number of (in the example shown three) outlets 87 communicating with respective distinct points on the bottom surface of plate 77; and a conduit 88 formed through a cylindrical column 89 extending upwards from manifold 84 and through shaft 64.

Portion 82 comprises an annular conduit 90, which is formed through a bell 91 fixed to slide 62 with its concavity facing downwards, extends coaxially with axis 66, communicates with a feed tube 92 of the pneumatic suction device (not shown), and is located facing conduit 88 so as to communicate with conduit 88 regardless of the angular position of conduit 88 about axis 66.

In connection with the above, it should be pointed out that:
slide 61 is moved in direction 19 when setting up and/or servicing orienting device 60;
slide 62 is moved in direction 63 when setting up orienting device 60 as a function of the thickness of panel 2; and
each plate 77 has sensors (not shown) for determining the dimensions of panel 2 in directions 8 and 19, and for selectively activating outlets 87 accordingly.

Operation of orienting device 60 is easily deducible from the foregoing description with no further explanation required.

## Claims

1. A line for conveying a panel (2) of wood or similar, comprising conveying means (6, 7) defining at least one conveying plane (11, 21) for said panel (2), and for feeding the panel (2) in a given first direction (8) and along a given path (P); and an orienting device (9; 60) located along said path (P), and in turn comprising gripping means (37; 76) mounted to rotate about an axis (25; 66) perpendicular to said conveying plane (11, 21), and for imparting to said panel (2) a rotation of a given angle (a) about said axis (25; 66), and stop means (27; 74) mounted crosswise to said conveying plane (11, 21) to position said panel (2) correctly in said first direction (8) and in a second direction (19) substantially crosswise to said axis (25; 66); **characterized in that** said stop means (27; 74) rotate about said axis (25; 66) together with said gripping means (37; 76).

2. A line as claimed in Claim 1, wherein said stop means (27; 74) comprise at least two stop members (27; 74) extending radially outwards from said axis (25; 66); said gripping means (37; 76) extending between said stop members (27; 74) to engage at least partly a face (3) of said panel (2) substantially parallel to said conveying plane (11, 21).

3. A line as claimed in Claim 1 or 2, wherein said orienting device (9; 60) also comprises a shaft (24; 64, 70, 71) coaxial with said axis (25; 66) and supporting said stop means (27; 74); and first actuating means for rotating said shaft (24; 64, 70, 71) in steps about said axis (25; 66); said gripping means (37; 76) being fitted in sliding and angularly fixed manner to said shaft (24; 64, 70, 71).

4. A line as claimed in Claim 3, wherein said orienting device (9; 60) also comprises second actuating means (40, 41; 79) for moving said gripping means (37; 76), with respect to said shaft (24; 64, 70, 71), between a first operating position, in which said gripping means (37; 76) are separated from said conveying plane (11, 21) by a distance greater than a thickness of said panel (2) measured parallel to said axis (25; 66), and a second operating position, in which the gripping means (37; 76) are separated from said conveying plane (11, 21) by a distance substantially equal to said thickness.

5. A line as claimed in Claim 4, wherein said orienting device (9) also comprises a pickup station (46) and a release station (47) for respectively picking up and releasing said panel (2); said second actuating means (40, 41) comprising elastic thrust means (40) acting on said gripping means (37) to keep the gripping means (37) in said first operating position, and two actuating devices (41) for moving said gripping means (37) into said second operating position at each of said pickup (46) and release (47) stations and in opposition to said elastic thrust means (40).

6. A line as claimed in Claim 5, wherein said actuating devices (41) comprise respective actuating cylinders (42, 43), which are aligned with said elastic thrust means (40) when said gripping means (37) are located at said pickup station (46) and said release station (47) respectively.

7. A line as claimed in any one of Claims 3 to 6, wherein said orienting device (9; 60) also comprises third actuating means (29; 62) for selectively controlling the position of said gripping means (37; 76) along said axis (25; 66) as a function of a thickness of said panel (2) measured parallel to said axis (25; 66).

8. A line as claimed in any one of the foregoing Claims, wherein said gripping means (37; 76) are suction gripping means; the orienting device (9; 60) comprising at least one pneumatic circuit (48; 80) connecting said gripping means (37; 76) to a pneumatic device.

9. A line as claimed in Claim 8, wherein said orienting device (9; 60) comprises supporting means (23; 62, 91) for supporting said gripping means (37; 76) in rotary manner; said pneumatic circuit (48; 80) comprising a first and a second portion (49, 50; 81, 82) communicating with each other and angularly integral with said gripping means (37; 76) and said supporting means (23; 62, 91) respectively.

10. A line as claimed in Claim 9, wherein said second portion (50; 82) comprises an annular conduit (56; 90) substantially coaxial with said axis (25; 66) and facing and communicating with said first portion (49; 81).

11. A line as claimed in any one of the foregoing Claims, wherein said stop means (27; 74) comprise a spoked wheel (26; 71) comprising four stop members (27; 74) equally spaced about said axis (25; 66); said gripping means (37; 76) extending between the stop members (27; 74) in each pair of adjacent stop members (27; 74).

12. A line as claimed in any one of the foregoing Claims, wherein said conveying means (6, 7) comprise first (6) and second (7) conveying means arranged in series to define said path (P); said second conveying means (7) comprising at least one belt conveyor (15).
